# EUROPEAN PATENT APPLICATION

(11) **EP 1 754 996 A1**
(43) Date of publication of application: **21.02.2007**
(21) Application number: 05719816.0
(22) Date of filing: 02.03.2005
(51) Int. Cl.: G02F 1/19, G09F 9/00, G09G 3/20, G09G 3/34

(54) **IMAGE DISPLAY ELEMENT, IMAGE DISPLAY SHEET, IMAGE DISPLAY AND IMAGE DISPLAYING METHOD**

(30) Priority: 05.04.2004 JP 2004111548
(71) Applicant: The Furukawa Electric Co., Ltd., Chiyoda-ku Tokyo 100-8322 (JP)
(72) Inventor: Matsui, Masakazu, The Furukawa Electric Co., Ltd., Tokyo 1008322 (JP)
(74) Representative: Feray, Valérie
(86) International application number: PCT/JP2005/003501
(87) International publication number: WO 2005/101114

(57) **Abstract**

An image display element comprises a multilayer film optical filter in which layers of two or more types of materials reflecting or transmitting therethrough light of a specific color and having different refractive indexs are alternately superimposed. The filter is shaped like a fine particle. The multilayer film optical filter is, for example, a non-light-absorbing interference type color filter which reflects light having a predetermined color and transmits a complementary color of the predetermined color therethrough. Further, multilayer film optical filter is a dielectric multilayer film, a transparent resin multilayer film or a glass multilayer film.

## Description

### Technical Field

The present invention relates to an image display element which constitutes a pixel image display, an image display sheet obtained by arranging a plurality of such image display elements in a plane, an image display apparatus which performs image display by using the image display sheet, electronic paper using the image display apparatus, and an image displaying method which carries out image display by using the image display apparatus.

### Background Art

With recent development of an information-oriented society, importance of a technology such as a display or a hardcopy has been further increased. Further, paper which has been conventionally used as a medium for communication still has high effectiveness in terms of portability, storage stability or a method of recognizing information of persons. Therefore, not only a display medium such as a CRT or an LCD but also a sheet-like display medium having memory properties (data storage properties) has been recently developed.

As such a display medium having memory properties, Patent Reference 1 proposes contents of a technology concerning electronic paper. Furthermore, as a recording material used for this display medium, Non-patent Reference 1 discloses, e.g., various kinds of rewritable recording materials. Currently, development of such a rewritable recording material candidate technology for specific applications has been partially started, but electronic paper having all characteristics of a high image quality like printing, highly reliable memory properties, flexibility like paper, colorization, a low price, instantaneous printing and others has not been designed yet.

Electronic paper has been in a developing process, using various kinds of display systems including a system utilizing rotation of small spherical particles having different colors in accordance with each hemisphere, a system utilizing electrophoresis of a charged toner, and a system utilizing a ferroelectric liquid crystal.

In these systems, the system utilizing rotation of small spherical particles having different colors in accordance with each hemisphere is also called a twisted ball display system. Development of a display system of this type has been advanced most. Furthermore, to realize color display using a twisted ball system, color display is performed by using a plurality of types of twisted balls (light-absorbing type colored twisted balls) colored in red/white, blue/white and green/white in accordance with each hemisphere. In the alternative, color display is effected by using black/white twisted balls and color filters.
Patent Reference 1: Japanese Patent Application Laid-open No. 171620/1998.
Non-patent Reference 1: "Japan Hardcopy '99 Collected Papers", Imaging Society of Japan, 1999, PP 209- 251.

### Summary of the Invention

However, the above-described prior art has the following problems.

In electronic paper employing the color display twisted ball display, RGB must be two-dimensionally aligned by using color filters because light-absorbing type colored twisted balls are used,. As a result, a color resolution is reduced to 1/3 or less of that of the twisted ball display for black and white (monochrome) display, and the display is darkened. Moreover, to compensate for a deteriorated contrast, a color filter for color matching is required. Complicated and accurate positioning and alignment of components, including aligning electrodes with a color filter and aligning the electrodes with the twisted balls is required.

Therefore, it is difficult for electronic paper using the conventional twisted ball display to provide bright color display with high contrast, a high definition and a high resolution.

It is an object of the present invention to provide electronic paper capable of providing bright color display with high contrast and a high definition and resolution.

In order to solve the above-described problems, according to a first aspect of an image display element of the present invention, there is provided an image display element formed of a multilayer film optical filter in which layers of two or more types of materials with different refractive indexes which reflect or transmit therethrough light of a specific color are alternately laminated or stacked. The multilayer film optical filter is shaped like a fine particle.

According to a second aspect of the image display element of the present invention, there is provided an image display element, wherein the multilayer film optical filter is a non-light-absorbing interference type color filter which reflects light with a predetermined color and transmits a complementary color of this color therethrough.

According to a third aspect of the image display element of the present invention, there is provided an image display element, in which the multilayer film optical filter is a dielectric multilayer film, a transparent resin multilayer film or a glass multilayer film.

According to a fourth aspect of the image display element of the present invention, there is provided an image display element, wherein charged layers of a transparent dielectric material, a transparent ferroelectric material or a transparent chargeable material are formed at outer peripheries of the multilayer film optical filter.

According to a fifth aspect of the image display element of the present invention, there is provided an image display element, wherein a maximum dimension of an outer shape of the multilayer film optical filter falls within a range of 2 µm to 200 µm.

According to a sixth aspect of the image display element of the present invention, there is provided an image display element, wherein an outer shape of the multilayer film optical filter is one of a planar object, a cube and a sphere.

According to a first aspect of an image display sheet of the present invention, there is provided an image display sheet which comprises: a plurality of charged image display elements described above; a pair of transparent electrodes which transmit visible light therethrough; and a pair of transparent support films which rotatably accommodate the plurality of image display elements at a fixed position between the pair of transparent electrodes, wherein rotation or movement of the image display elements can be controlled by applying a voltage to the pair of transparent electrodes to apply an electric field to the image display elements.

According to a second aspect of the image display sheet of the present invention, there is provided an image display sheet which displays one of red, green, blue, cyan, magenta and yellow or black/white.

According to a first aspect of an image display apparatus of the present invention, there is provided an image display apparatus, wherein a rear surface sheet or a front surface sheet is arranged on or a reflecting film or an absorbing film is applied to a rear surface or a front surface of one support film of an image display sheet comprising the pair of support films.

According to a second aspect of the image display apparatus of the present invention, there is provided an image display apparatus, wherein the image display sheet which displays a red color, the image display sheet which displays a green color and the image display sheet which displays a blue color are superimposed in such a manner that pixel positions of the respective image display sheets overlap each other, thereby effecting color image display based on additive color mixing.

According to a third aspect of the image display apparatus of the present invention, there is provided an image display apparatus, wherein the image display sheet which displays cyan, the image display sheet which displays magenta and the image display sheet which displays yellow are superimposed in such a manner that pixel positions of the respective image display sheets overlap each other, thereby effecting color image display based on subtractive color mixing.

According to a fourth aspect of the image display apparatus of the present invention, there is provided an image display apparatus, wherein image display elements corresponding to display colors of respective pixels are used to display respective display colors.

According a fifth aspect of the image display apparatus of the present invention, there is provided an image display apparatus, wherein a reflection type image displaying method is used to perform image display.

According to a sixth aspect of the image display apparatus of the present invention, there is provided an image display apparatus, wherein a transmission type image displaying method is used to perform image display.

According to a seventh aspect of the image display apparatus of the present invention, wherein a rear surface sheet is arranged on or an absorbing film is applied to a rearmost surface of an image display surface.

According to an eighth aspect of the image display apparatus of the present invention, wherein a front surface sheet is arranged on or a reflecting film is applied to a forefront surface of an image display surface.

According to an aspect of electronic paper of the present invention, there is provided electronic paper comprising the image display apparatus described above.

According to an aspect of an image displaying method of the present invention, there is provided an image displaying method comprising: rotatably accommodating each of a plurality of image display elements formed of a charged multilayer film optical filter at fixed positions between transparent electrodes formed on a pair of support films which transmit visible light therethrough; and controlling a direction of each pixel display element by allowing an electric field to function with respect to each pixel display element, thereby performing image display.

According to the present invention, since each pixel display element which develops a non-light-absorbing type multiplayer film optical filter color is used rather than light absorbing type coloring, a reduction in a light utilization ratio (brightness) and contrast can be avoided, and hence a loss of light can be suppressed to the minimum level, thereby realizing the bright image display apparatus with high contrast.

Further, since the image display apparatus is constructed by laminating the image display sheet of a red color, the image display sheet of a blue color and the image display sheet of a green color, the number of pixels become equivalent to that in monochromatic display, thus avoiding a reduction in a color resolution.

Furthermore, when an electric field is applied to each pixel display element to control a direction of each pixel display element, a position of each pixel display element can be fixed as required after displaying an arbitrary image on electronic paper, thus maintaining the displayed image for a long time.

Moreover, since a color filter which is required when performing color display in the twisted ball mode is no longer necessary, positioning of the electrodes and the color filter is not required, or positioning of the electrodes and the color twisted balls is not required, thereby enabling high-definition color display.

### Brief Description of Drawings

FIG. 1 is a view showing a configuration of an image display element to which the present invention is applied.
FIG. 2(a) is a view showing a state of color development of the image display element depicted in FIG. 1, FIG. 2(b) is a graph showing a reflection factor of reflected light depicted in FIG. 2(a), and FIG. 2(c) is a graph showing a transmission factor of transmitted light depicted in FIG. 2(a).
FIG. 3(a) is a view showing how the image display element depicted in FIG. 1 is transparently observed, FIG. 3(b) is a graph showing a reflection factor of reflected light depicted in FIG. 3(a), and FIG. 3(c) is a graph showing a transmission factor of transmitted light depicted in FIG. 3(a).
FIG. 4 is a view partially showing a configuration of an image display sheet to which the present invention is applied.
FIG. 5 is a view partially showing a configuration of an image display apparatus to which the present invention is applied.
FIG. 6 is a view partially showing a configuration of an image display apparatus to which the present invention is applied.
FIG. 7 is a view illustrating a state of reflection/transmission of incident light with respect to the image display sheet.

### Detailed Description of the Invention

This embodiment will now be described in detail with reference to the accompanying drawings.

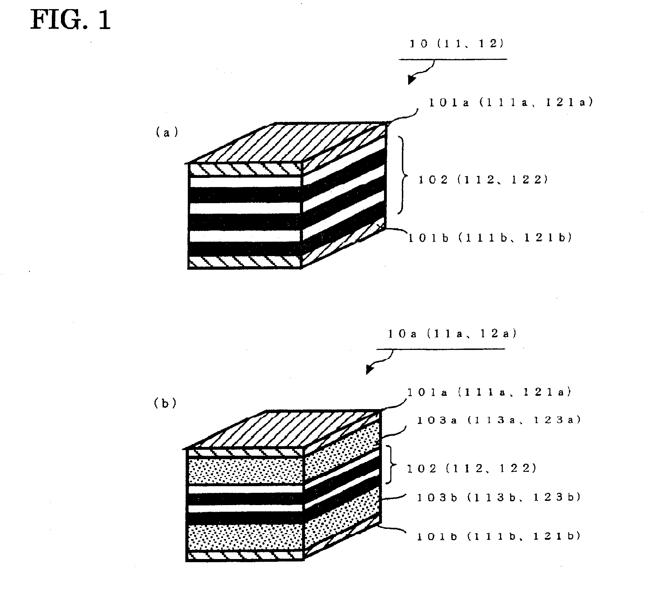

Image display elements 10, 11 and 12 will be first explained with reference to FIG. 1. The image display elements 10, 11 and 12 are interference type filters which respectively reflect light of a red color (R), a green color (G) and a blue color (B) with respect to incident light and transmit light of cyan (C), magenta (M) and yellow (Y) therethrough.

The image display element 10 is obtained by interposing a multilayer film optical filter 102 having periodicity between a pair of charged layers 101a and 101b, the image display element 11 is obtained by interposing a multilayer film optical filter 112 having periodicity between a pair of charged layers 111a and 111b, and the image display element 12 is obtained by interposing a multilayer film optical filter 122 having periodicity between a pair of charged layers 121a and 121b. It is to be noted that an image display element 10a in which transparent resin layers 103a and 103b are respectively provided between the multilayer film optical filter 102 and the charged layers 101a and 101b may be used in place of the image display element 10, an image display element 11a in which transparent resin layers 113a and 113b are respectively provided between the multilayer film optical filter 112 and the charged layers 111a and 111b may be used in place of the image display element 11 and an image display element 12a in which transparent resin layers 123a and 123b are respectively provided between the multilayer film optical filter 122 and the charged layers 121a and 121b may be used in place of the image display element 12.

Here, the interference type filter means a filter which reflects light with a specific color and transmits remaining light therethrough. Additionally, light having a color which is required for a corresponding pixel is reflected toward a light source side but, on the other hand, transmitted light is again reflected toward a display surface by a reflecting plate or the like provided below an optical waveguide, and hence this reflected light is reused for display. As a result, a light utilization ratio is improved, and a reduction in power consumption or an improvement in luminance can be realized. It is to be noted that such an interference type filter is generally constituted of a multilayer film, but a filter which is formed by solidifying a cholesteric liquid crystal has been also recently proposed (see, e,g., "Development of Color Filter using Cholestric Liquid Crystal (Tokuhisa Moriya, Dai Nippon Printing Co., Ltd.), the Sixth HLC Findings Announcement, p. 1).

It is to be noted that the image display elements 10, 11 and 12 have the same configuration, and hence the image display element 10 alone will be explained in the following description of the image display elements 10, 11 and 12, and descriptions of the image display elements 11 and 12 will be omitted for simplicity.

As shown in FIG. 1, the multilayer film optical filter 102 of the image display element 10 is obtained by alternately superimposing laminated filter materials consisting of two types of materials with predetermined thicknesses having different refractive indexs. The laminated filter materials are alternately superimposed with the predetermined thicknesses in order to reflect light having a predetermined wavelength on a laminated interface of the laminated filter materials having different refractive indexs. Although not shown, the laminated filter materials are not necessarily restricted to two types, and three or more types may be adopted, and these types can be appropriately selected in accordance with a design of the laminated filter.

Although substances of the laminated filter materials constituting the multilayer film optical filter 102 are not restricted in particular as long as they are transparent, there are, e.g., an acrylic resin such as polystyrene, polycarbonate or polymethacrylic acid (PMMA), a styrene acrylonitrile resin (SAN), an alicyclic resin (COP), a polyester resin, an amorphous fluorocarbon resin, poly-4-methylpentene (PMP), glass, quartz and others. Of these substances, at least two types of laminated filter materials whose refractive indexs are different from each other to some extent are alternately superimposed. As a result, light having a predetermined wavelength is reflected on the interface of the laminated filter materials having different refractive indexs.

Further, when resins are used as the two types of laminated filter materials, a combination of resins having poor compatibility is preferable.

When a plurality of laminated filter material resins having compatibility are superimposed, there is a problem that a third layer having an inclining function is produced between two layers adjacent to each other. Furthermore, there is generally a problem that a combination of laminated filter material resins having compatibility is not suitable for an optical filter since a difference in refractive index between these resins is small. Moreover, there is a problem that the number of layers in the multilayer film optical filter 102 is increased in order to obtain the same filter characteristics. When, e.g., an acrylic resin and polystyrene are alternately superimposed as the laminated filter material resins, such problems can be avoided.

On the other hand, although a combination of resin materials having poor compatibility has a problem in adhesion properties on an interface, this problem is avoidable when processing temperatures of these resins are close to each other (Tg, a degree of viscosity; a molecular weight). In this regard, a combination of an acrylic resin and polystyrene is preferable.

The two types of laminated filter materials have refractive indexs n different from each other. Since a thickness of each of these two types of laminated filter materials is designed in such a manner that a product of the refractive index n and the thickness of the laminated filter material becomes 1/4-fold of a wavelength of reflected light, the refractive indexs are different from each other. For example, in order to design the image display element 10 which reflects red light of 605 to 625 nm, a thickness of the laminated filter material is a value (approximately 100 nm) which is obtained by dividing a length which is 1/4 of the wavelength by a refractive index of the laminated filter material to be used.

However, the thickness of the laminated filter material can be calculated in this manner, but preparing a laminated filter material having a thickness of 100 nm order and directly bonding this material to another laminated filter material is difficult. Thus, a plurality of sheets of two types of laminated filter materials are subjected to thermocompression by using a roller while maintaining a large size, then elongation processing is further effected by a roller, and a thickness of each laminated filter material is adjusted to a desired thickness, thereby obtaining the multilayer film optical filter 102 having a large size. Further, filter characteristics with respect to the image display element 10 are adjusted based on thickness adjustment of the multilayer film optical filter 102. A total number of the laminated filter materials constituting this multilayer film optical filter 102 is not specified in particular, but 10 or more layers are preferable.

It is to be noted that a method of superimposing the laminated filter materials is not restricted to the above-described method as long as the multilayer film optical filter having a desired thickness is obtained, and compression molding, a static mixer, coextrusion, casting, an evaporation method, a sol-gel method and others can be appropriately selected, for example.

The image display element 10 can be obtained by further cutting the sheet-like multilayer film optical filter 102 having a large size into a predetermined size (a fine particle shape).

As a size of the image display element 10 (which will be referred to as an element size hereinafter), approximately 2 µm to 200 µm is preferable. In particular, the element size must be larger than a wavelength of reflected light, and it must be at least several-fold of the wavelength. Therefore, considering processability or handling properties, 10 µm or above is further preferable as the element size.

An upper limit value of the element size of the image display element 10 is restricted in terms of a pixel in a later-described image display apparatus 30. That is, when an image resolution of the image display apparatus 30 is 100 dpi, a size corresponding to one pixel becomes approximately 250 µm but an area occupied by a separator 204 is also included in this value, and hence 200 µm or below at a maximum is preferable as the element size of the image display element 10 itself, and approximately 50 µm is preferable if the image resolution is 400 dpi. In order to obtain a high-definition image in this manner, the element size must be reduced as much as possible.

Therefore, as a range of the element size of the image display element 10, 10 to 50 µm is most preferable and, usually, the image display element 10 having the element size of 2 µm to 200 µm is often used.

There is no restriction in a shape of the image display element 10 in particular as long as a function as the multilayer film optical filter 102 is not deteriorated, and the outer shape may be a planar body, (a three-dimensional figure having parallel flat surfaces), a cube or a sphere. Here, the planar body means a three-dimensional figure having flat surfaces parallel with a later-described image display sheet 20 provided with the image display element 10, and various kinds of shapes such as a circular disk or a polygonal column can be considered.

It is to be noted that the element size of the image display element 10 is determined as a diameter of a sphere when an element shape of the image display element 10 is a spherical shape, but it is a maximum length in a horizontal direction (a lateral direction) when a screen is configured with the image display sheet 20 being determined as a pixel unit in case of a non-spherical shape.

Further, materials of the charged layers 101a and 101b are not restricted in particular, and there are, e.g., titanium oxide (TiO₂) fine particles, alumina fine particles, polystyrene fine particles, acrylic plastic fine particles and others. For example, titanium oxide is charged to be positive. Charging of insulating particles is produced by mixing agitation, frictional electrification or mutual friction caused due to reciprocation between electrodes 202a and 202b respectively formed on support films 201a and 201b.

As other methods of forming the charged layers 101a and 101b than the one mentioned above, there are a method of coating surfaces of the image display element 10 with a material having predetermined electric charges, a method of coating the same with a transparent dielectric material or ferroelectric material and others in order to form the charged layers. In this case, for example, both upper and lower surfaces of the multilayer film optical filter 102 of the image display element 10 are coated with a dielectric resin to form the charged layers 101a and 101b. In coating with respect to the dielectric resin, roller pressure bonding or the like based on a later-described thermocompression method is carried out, thereby finishing to provide a predetermined dimension. Furthermore, electric charges may be injected into a dielectric material or a ferroelectric material to realize electrets, thereby forming the charged layers.

A color development function of the image display element 10 will now be described.

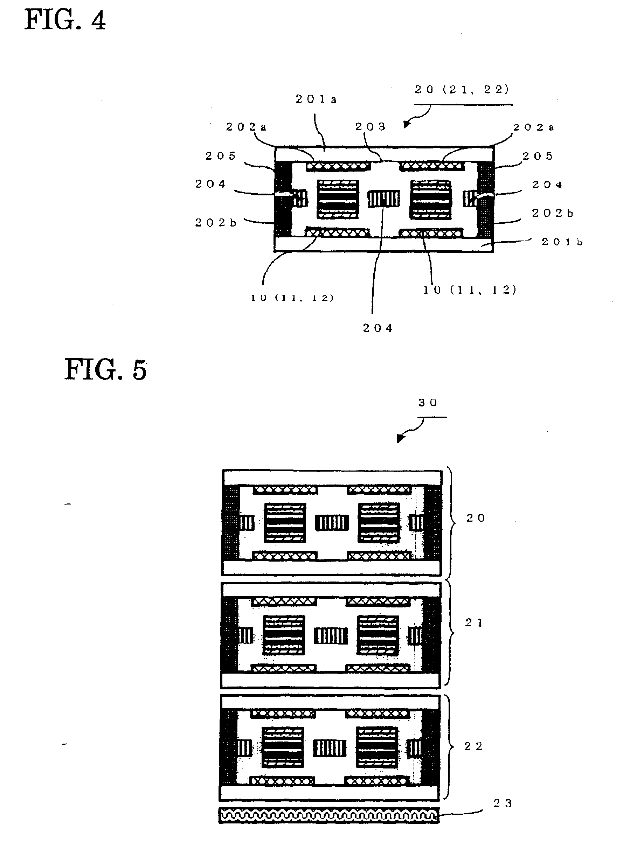

In a case where an image display apparatus 30 shown in FIG. 5 is of a reflection type, when light reflected on each laminated interface of the laminated filter resin of the image display element 10 reaches eyes of an observer, the observer can see the image display element 10 as a predetermined color. Furthermore, in a case where the image display apparatus 30 is of a transmission type, when light (a complementary color of the reflected light) transmitted through each laminated interface of the laminated filter resin of the image display element 10 reaches eyes of an observer, the observer can see the image display element 10 as a predetermined color.

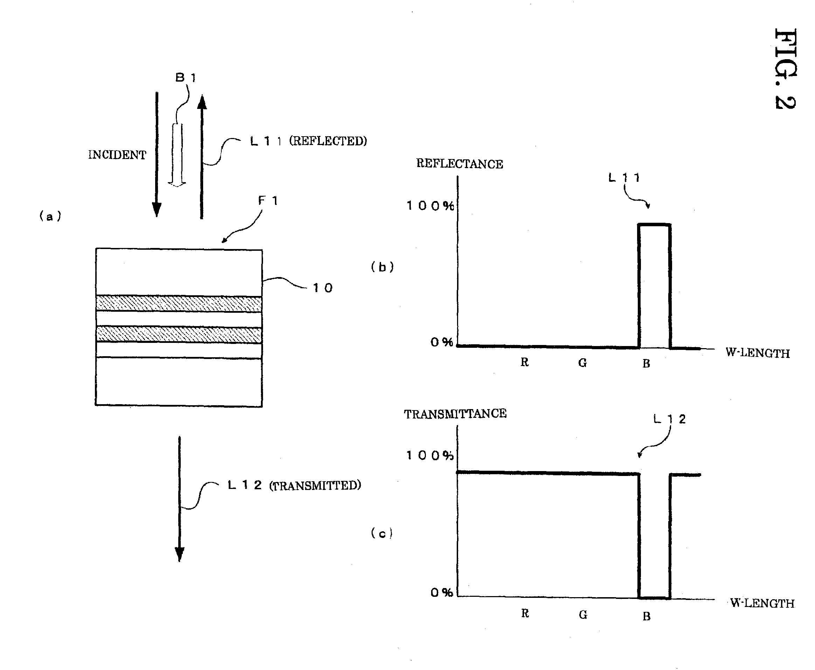

Reflection factor and refractive index spectrums with respect to reflected light and transmitted light when an observer observes a red color will now be described by using the image display element 10 with reference to FIGS. 2(a) to (c) (which is the same in case of the image display elements 11 and 12 in which reflected light has a green color and a blue color.

FIG. 2(a) shows states of incident light, reflected light L11 and transmitted light L12 with respect to the image display element 10, FIG. 2(b) shows a reflection factor spectrum of the reflected light L11, and FIG. 2(c) shows a transmission factor spectrum of the transmitted light L12. As shown in FIG. 2(a), when a red color is observed as the reflected light, a laminated surface F1 of the laminated filter resin of the image display element 10 becomes vertical to an observing direction (a direction indicated by reference character B1 in the drawing) of the observer.

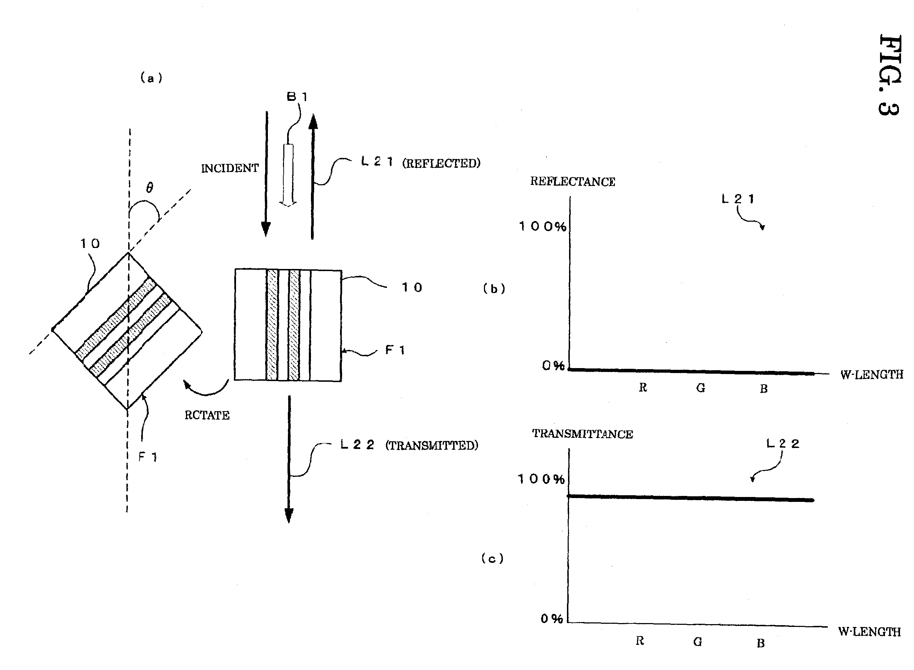

Reflection factor and transmission factor spectrums with respect to reflected light and transmitted light when incident light is completely transmitted will now be described by using the image display element 10 in which the reflected light has a red color with reference to FIGS. 3(a) to (c) (which is the same in case of the image display elements 11 and 12 in which reflected light has a green color and a blue color).

FIG. 3(a) shows states of incident light which enters the image display element 10, reflected light L11 and transmitted light L12, FIG. 3(b) shows a reflection factor spectrum of reflected light L21, and FIG. 3(c) shows a transmission factor spectrum of transmitted light L22. As shown in FIG. 3(a), when transparency is obtained (i.e., when the observer observes transparency), a laminated surface F1 of the laminated filter resin of the image display element 10 becomes parallel to a direction denoted by reference character B1 in the drawing. Moreover, the red color is thinned as an angle formed between the reference numeral B1 in the drawing and the laminated surface F1 becomes closer to zero degree.

The image display sheet 20 will now be described with reference to FIG. 4. The image display sheet 20 described below develops a red color of the red color, a green color and a blue color. It is to be noted that image display sheets which develop a green color and a blue color (i.e., the image display sheets 21 and 22 shown in FIG. 5) have the same configuration as that of the image display sheet 20 except that they have the image display elements 11 and 12 which respectively develop the green color and the blue color, and hence a detailed description of the image display sheets 21 and 22 will be omitted.

FIG. 4 is a view showing a part of a vertical cross section with respect to a surface of the image display sheet 20.

As shown in FIG. 4, the image display sheet 20 is provided with support films 201a and 201b, electrodes 202a and 202b, a dispersing medium 203, separators 204, spacers 205, the image display elements 10 and others.

In the image display sheet 20, the dispersing medium 203 is filled between the two support films 201a and 201b facing each other, in the dispersing medium 203 one or more image display elements 10 are arranged in a matrix form (i.e., for each pixel) spreading on the surface of the image display sheet 20, and one or more electrodes 202a and one or more electrodes 202b are arranged in a matrix form (i.e., for each pixel) on respective surfaces of the support films 201a and 201b at positions facing each other. Here, each of the image display elements 10 is arranged between the respective electrodes 202a and 202b facing each other through each separator 204.

A material having a high transmission factor for transmitted visible light and high heat resisting properties is suitable for the support films 201a and 201b. Further, a material assuring predetermined mechanical strength is preferable. For example, it is possible to use various kinds of polymer sheets formed of polyethylene terephthalate, polyether sulfamide, polyethylene, polyethersulfone, polycarbonate, polyimide or acrylic. Furthermore, an inorganic sheet formed of, e.g., glass or quartz can be used depending on a use conformation. In particular, as the support film of electronic paper requiring a flexible base material, a transparent resin film having transparency and mechanical strength is preferable. Although 5 to 1000 µm is preferable as a thickness of the support film 201a or 201b, strength is not enough and the film is deformed when the thickness is small, and hence an accuracy of arrangement of the dispersing medium 203, the image display element 10, the separator 204 and others is reduced. Moreover, when the thickness is too large, sharpness or contrast of a display function is lowered.

Each of the electrodes 202a and 202b is formed of a transparent electrode material on which a pattern can be formed. As such a transparent electrode, it is possible to use an electrode obtained by forming a transparent electroconductive oxide such as ITO, electroconductive silver oxide or electroconductive zinc oxide into a thin-film shape by a sputtering method, a vacuum deposition method, a CVD method, a coating method or the like or an electrode obtained by mixing a conductive agent in a solvent or a synthetic resin binder. In this embodiment, each of the electrode 202a and 202b is an electrode formed by coating a mixture in which ITO is mixed in a synthetic resin binder. A film thickness of an ITO electrode is 10 to 200 µm.

Here, ITO is indium oxide (In₂O₃) containing approximately 5% of tin oxide (SnO₂) and has characteristics that a light transmission factor is high and an electric resistance is low.

It is to be noted that an electroconductive polymer consisting of polyethylene dioxythiophene and polystyrene sulfonate may be used besides ITO. since a film of such an electroconductive polymer can be manufactured from an aqueous solution, this material is suitable for flexible electronic paper having a plastic substrate as a base.

In regard to a thickness of each of the electrodes 202a and 202b, assuring electroconductivity and light permeability can suffice, and 3 to 1000 nm is preferable, but 5 to 400 nm is more preferable. Additionally, each of the electrodes 202a and 202b must be subjected to insulative coating to form a coating layer (not shown) so that electric charges of charged particles are not dissipated. On the other hand, in regard to formation of a coating layer with respect to the image display elements 10, 11 and 12, the image display element 10 having a negative electrostatic property is coated with a resin having a negative electrostatic property, and the image display element 10 having a positive electrostatic property is coated with a resin having a positive electrostatic property. In case of using a dielectric multilayer film or using a ferroelectric multilayer film, when upper and lower sides of the laminated filter material are coated with a dielectric film or a ferroelectric film, electric charges can be induced in the dielectric substance or the ferroelectric substance by charging each of the electrodes 202a and 202b with electric charges of external electrolysis. In this embodiment, the image display element 10 in which upper and lower sides of the laminated filter material are coated with the dielectric film is used. Therefore, external electrolysis can be used to charge the image display element with electric charges.

For the dispersing medium 203, dodecylbenzene, isoparaffin, silicone oil or the like is used as an insulative lubricating medium. In an application example where priority should be given to lubricating properties in particular, using a silicone oil adjusted to have a low degree of viscosity can obtain excellent quick responsiveness. Further, water, alcohol or the like can be also used as a medium. A substance obtained by appropriately mixing the respective mediums mentioned above in accordance with materials of the support films 201a and 201b, the charged layer and others can be used as the dispersing medium 203 but the silicone oil having a low degree of viscosity is used as the dispersing medium 203. Furthermore, the dispersing medium 203 having dielectric characteristics is suitable in case of coating the image display element 10 with a dielectric material, and the dispersing medium which does not have dielectric characteristics is suitable in case of coating the image display element 10 with the charged layers.

The separator 204 determines an installation gap of a pair of opposed electrodes (the electrodes 202a and 202b) arranged on the support films 201a and 201b, and specifies a position of the image display element 10 in the image display sheet 20, 21 or 22. Although there are two types of separators 204, i.e., a tray-shaped type and a grid type, the grid type is superior in terms of properties of holding a position of the image display element 10. Therefore, in this embodiment, the grid type separator 204 is used.

The separator 204 is obtained by polymerizing a grid type polymeric monomer, and constitutes a barrier between the support films 201a and 201b. As a result, the separator 204 having excellent binding properties with respect to the support films 201a and 201b can be formed without generating a gap between the support films 201a and 201b and the separator 204. Therefore, a fine barrier whose line width is not greater than 10 µm can be formed, and a hole area ratio or adhesion properties of the separator 204 can be assured, thereby realizing miniaturization of a partitioned region. As a pattern of the separator 204 which accommodates/arranges the image display element 10, it is possible to apply various kinds of patterns such as a finely filled circular zigzag array, a circular lattice-like array, a hexagonal honey-comb array, a finely filled triangular pattern or the like, the lattice-like array pattern is used in this embodiment.

As an area share ratio of the barrier itself which occupies an area of a region partitioned by the barrier constituted of this separator 204, 10% or below is preferable, and this value can be realized by using the polymeric monomer.

As a material of the separator 204, utilizing a polymeric monomer or a polymer precursor is preferable, but using a material which is polymerized by photo polymerization, ultraviolet rays or the like is more preferable. As the polymeric monomer or the polymer precursor, styrene, mathacrylic acid, vinyl acetate or the like can be used. These materials are superior in chemical resisting properties, heat resisting properties, environment resisting properties, strength and elasticity.

Moreover, each spacer 205 is used in order to adjust a gap between the support films 201a and 201b describing two electrode patterns. Glass beads or polystyrene beads are used for the spacer 205. Additionally, it is possible to adopt a structure using a polymer pattern wall or the like formed by patterning the support films 201a and 201b.

In the image display sheet 20 having the above-described configuration, when a voltage is applied to the electrodes 202a and 202b and an electric field is generated between the electrodes 202a and 202b, the charged image display element 10 rotates (auto-rotates) and it is rotated and moved in a fixed orientation or direction corresponding to the electric field (i.e., an orientation or direction along which the surface of the image display sheet 20 becomes parallel with the laminated surface of the laminated filter resin included in the image display element 10).

That is, since the charged layers 101a and 101b are charged, the image display element 10 behaves as a dipole in the electric field (this is also true in case of the image display elements 11 and 12). Therefore, in this electric field, the image display element 10 rotates (auto-rotates)/moves based on an electrostatic force, and stops at the most stable position (a position having a minimum energy). This stable position means a position at which the laminated surface of the laminated filter resin of the image display element 10 becomes parallel with sheet surfaces (later-described surfaces of the support films 201a and 201b) of the image display sheet 20.

Since the electric field generated between the electrodes 202a and 202b facing each other can be controlled to individually control a direction of each image display element 10 in this manner, an arbitrary image can be displayed by using a dot pattern in which each image display element 10 is determined as one pixel. It is to be noted that even though application of a voltage to the electrodes 202a and 202b is stopped after displaying an arbitrary image by controlling the electric field, the electric field generated between the electrodes 202a and 202b facing each other can be maintained by electric charges which have electrified the electrodes 202a and 202b, thus holding the image.

The image display apparatus 30 will now be described with reference to FIG. 5. As shown in FIG. 5, in the image display apparatus 30, the image display sheets 20, 21 and 22 which generate respective colors R, G and B are superimposed, and a rear surface plate 24 is provided on one surface of the image display sheet 22.

The image display element 10 is rotated until the laminated surface of the laminated filter resin of the image display element 10 in the image display sheet 20 becomes parallel with the sheet surfaces of the image display sheet 20 in case of generating a red color, and the image display element 10 is rotated until the laminated surface of the laminated filter resin of the image display element 10 in the image display sheet 20 becomes vertical to the sheet surfaces of the image display sheet 20 in case of providing transparency.

The image display element 11 is rotated until the laminated surface of the laminated filter resin of the image display element 11 in the image display sheet 21 becomes parallel with the sheet surfaces of the image display sheet 21 in case of generating a green color, and the image display element 11 is rotated until the laminated surface of the laminated filter resin of the image display element 11 in the image display sheet 21 becomes vertical to the sheet surfaces of the image display sheet 21 in case of providing transparency.

The image display element 12 is rotated until the laminated surface of the laminated filter resin of the image display element 12 in the image display sheet 22 becomes parallel with the sheet surfaces of the image display sheet 22 in case of generating a blue color, and the image display element 12 is rotated until the laminated surface of the laminated filter resin of the image display element 12 in the image display sheet 22 becomes vertical to the sheet surfaces of the image display sheet 22 in case of providing transparency.

The image display apparatus 30 has a non-illustrated power supply portion, and electrically connected with a control device which controls directions of the respective image display elements 10, 11 and 12 based on supplied image information to perform writing or erasing of an image, gray scale control or the like. In case of displaying an image based on this image information, a voltage is applied to the electrodes 202a and 202b arranged in accordance with each of the image display elements 10, 11 and 12 to control direction of the image display elements 10, 11 and 12.

Here, the control device controls driving with respect to the image display elements 10, 11 and 12 based on a simple matrix drive mode, an active matrix drive mode or the like. A gray scale of pixels is controlled by using a plurality of transistor circuits in an analog drive mode, and one pixel is divided into a plurality of sub-pixels to control a gray scale of the pixels in a digital drive mode (an area coverage modulation mode) .

Here, as the method of controlling a gray scale in the active matrix drive mode, it is possible to utilize two modes, i.e., the analog drive mode and the digital drive mode.

Adjustment of contrast and a color tone of a color image is carried out by finely adjusting a rotation angle of the image display element 10. Further, when a backlight is used, contrast is adjusted by adjusting brightness of the backlight.

Furthermore, a power supply and an image control unit may be provided separately from the image display apparatus 30 in order to realize a portable type image display apparatus 30. Moreover, in case of the portable type, it is preferable to use a resin or the like having low light absorbing characteristics for the image display surface of the image display sheet 20 to protect this surface.

Additionally, flexibility of the image display apparatus 30 can be realized by using a protection sheet consisting of a deformable resin or the electrodes 202a and 202b. Further, an image can be erased by applying an alternating voltage to the electrodes 202a and 202b to randomize directions of the image display elements 10, 11 and 12, reflecting all of lights having a red color, a green color and a blue color to display a white color, or absorbing all of incident light to display a black color, and there are various methods including these methods. Using the image display apparatus 30 in this manner can realize the electronic paper which has a light weight and is superior in rewriting properties, flexibility, portability and image maintaining properties.

The image display apparatus 30 can perform color display by using any display mode, i.e., a reflection type display mode and a transmission type display mode. Furthermore, the image display apparatus 30 can effect color display by using any of additive color mixing and subtractive color mixing.

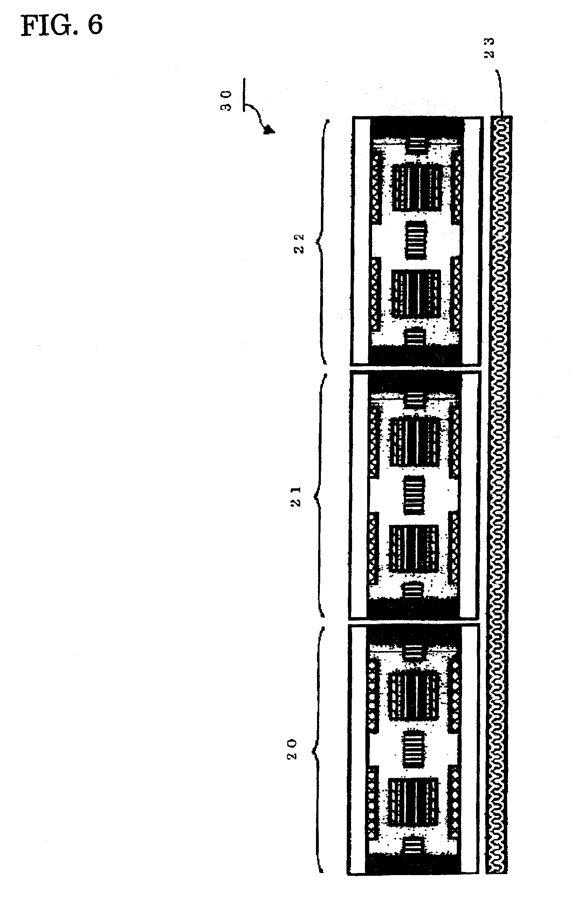

It is to be noted that the image display sheets 20, 21 and 22 which generate respective colors R, G and B are arranged to overlap in a direction vertical to the display surface in FIG. 5, but the arrangement conformation is not restricted thereto, and the image display sheets 20, 21 and 22 which generate respective colors R, G and B may be arranged in a lateral direction as shown in FIG. 6.

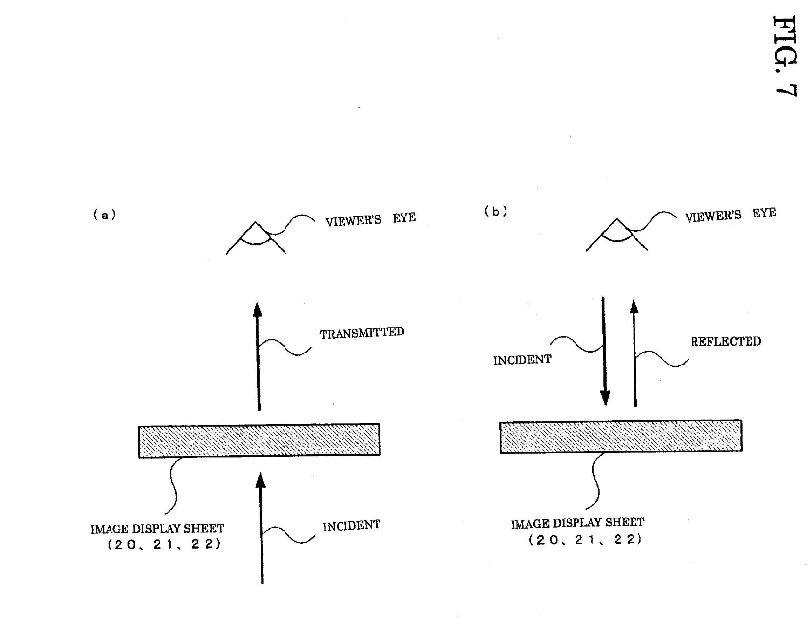

Here, FIG. 7(a) shows a state of incidence/reflection of light in the transmission type display mode, and FIG. 7(b) shows a state of incidence/reflection of light in the reflection type display mode.

The example of additive color mixing in the reflection type will be first described.

For example, the reflection type image display apparatus 30 is constituted by sequentially superimposing the respective image display sheets 20, 21 and 22 of a red color, a green color and a blue color while aligning corresponding pixel positions (positions of the image display elements 10, 11 and 12), and arranging the rear surface plate 23 on the image display sheet 22. These respective members are accommodated in a case or the like consisting of, e.g., an aluminum alloy having high rigidity and installed at an appropriate position in a room, on a desk or the like.

In case of using this reflection type image display apparatus 30 to display a color image based on the additive color mixing mode, a backlight may be used as a light source, but light on an observer's side, natural light or an indoor lighting may be also utilized.

In this case, a color image is displayed based on a combination of three primary colors, i.e., a red color, a green color and a blue color reflected from the respective image display sheets 20, 21 and 22. Therefore, a white color is displayed when lights of the three primary colors, i.e., the red color, the green color and the blue color are simultaneously reflected from the image display sheets 20, 21 and 22, and a black color is displayed when incident light is transmitted through the image display sheets 20, 21 and 22 at the same time (in this case, the rear surface plate 23 is a black reflecting plate).

Here, as the rear surface plate 23 which is the black reflecting plate, a member obtained by coating a surface of a glass substrate or a plastic substrate with black coloring paint is used. The rear surface sheet or a plate coated with an absorbing film arranged at a position opposite to light which enters the image display sheets is defined as the rear surface plate 23.

The example of subtractive color mixing in the transmission type will now be described.

In case of using the transmission type image display apparatus 30 to display a color image based on subtractive color mixing, a power supply, an image control portion and an image display portion which are not illustrated are required like the example of additive color mixing in the reflection type. In case of the image display apparatus 30 based on such subtractive color mixing in the absorption type, incident light enters the image display sheets from the rear surface of the image display apparatus 30 as seen from an observer, and the observer observes the light which has been transmitted through the respective image display sheets 20, 21 and 22. Therefore, the transmission type image display apparatus 30 can be utilized as, e.g., an electronic bulletin board using a backlight, or used as a display apparatus which is attached on a window or the like and utilizes light from the outside of a room to view an image. Here, when the image display apparatus 30 is of the transmission type and a light source such as a backlight is used, a front surface sheet is arranged or a plate coated with a reflecting film is arranged on a light source side (a front surface) of the image display sheets to prevent light from the backlight from leaking to the outside in some cases. In such a case, a white reflecting plate consisting of titanium oxide is used, for example.

In case of the subtractive color mixing, since a complementary color of reflected light is transmitted, black is displayed when the three primary colors, i.e., the red color, the green color and the blue color are all reflected, and white is displayed when all of the three primary colors are not reflected but all of incident light is transmitted.

Adjustment of contrast and a color tone of a color image is carried out by finely adjusting a rotational angle of each of the image display elements 10, 11 and 12 both when the image display apparatus is of the reflection type and the additive color mixing is adopted and when the image display apparatus is of the transmission type and the subtractive color mixing is adopted. Furthermore, when using a backlight, contrast is adjusted by adjusting brightness of the backlight.

Any other structures are equal in both the additive color mixing and the subtractive color mixing, and hence a function as the electronic paper can be given to the image display apparatus 30 both when the image display apparatus 30 is of the transmission type and the additive color mixing is adopted and when the image display apparatus is of the reflection type and the subtractive color mixing is adopted.

The electronic paper provided with the image display apparatus 30 will now be described. This electronic paper performs writing or display of a color image by using the image display apparatus 30.

This electronic paper requires a power supply when writing an image. That is, the electronic paper can hold a once-written image even though a power supply is not provided. Moreover, since the electronic paper has excellent portability and functionality since it uses the light-weighted image display apparatus 30 having flexibility.

As described above, the image display element 10 is an interference filter which has a multilayer film optical filter color which is of a non-light-absorbing type rather than conventional light absorbing type coloring and is constituted of a multilayer film consisting of a multilayer film of a transparent optical resin or a dielectric material or a multilayer film of glass and charged layers. The image display sheets 20, 21 and 22 are provided in accordance with respective colors (RGB), and each of these sheets is constituted by accommodating a plurality of image display elements between the pair of support films 201a and 201b at least one of which transmits visible light therethrough. The image display apparatus 30 is constituted by superimposing the image display sheets 20, 21 and 22 for the respective colors (RGB). When an electric field is applied to each of the image display elements 10, 11 and 12 included in each of the image display sheets 20, 21 and 22 to control a direction of each element, an arbitrary color image can be displayed. At this time, color display based on additive color mixing may be effected by superimposing the image display sheets 20, 21 and 22 of the three primary colors RGB, or color display based on subtractive color mixing may be carried out by superimposing the image display sheets of three colors CMY.

Therefore, since each of the image display elements 10, 11 and 12 which generates the multilayer film optical filter color rather than light absorbing type coloring is used, a reduction in a light utilization ratio (brightness) and contrast can be avoided, a loss of light can be suppressed at the minimum level, and bright reflection type electronic paper having high contrast can be realized.

Additionally, since the image display apparatus 30 is constituted by superimposing the image display sheets 20, 21 and 22, the number of pixels becomes equal to that in case of monochromatic display, and a reduction in a color resolution can be avoided.

Further, when an electric field is applied to each image display element 10 to control each direction, each direction of the image display elements 10, 11 and 12 in the image display sheets 20, 21 and 22 can be held after displaying an arbitrary image in the electronic paper, thus maintaining the displayed image for a long time.

Furthermore, a color filter which is required when performing color display in the twisted ball mode is no longer necessary, and positioning of the electrodes and the color filter is not required either, whereby high-definition color display is enabled.

It is to be noted that the description in this embodiment is given as to the examples of the image display element, the image display sheet, the image display apparatus, the electronic paper and image displaying method, and the present invention is not restricted thereto. Detailed structures and detailed operations of the image display elements 10, 11 and 12, the image display sheets 20, 21 and 22, the image display apparatus 30 and the electronic paper in this embodiment can be appropriately changed without departing from the scope of the present invention.

## Claims

1. An image display element comprising a multilayer film optical filter in which layers of two or more types of materials with different refractive indexes which reflect or transmit therethrough light of a specific color are alternately superimposed, the filter being shaped like a fine particle.

2. The image display element according to claim 1, wherein the multilayer film optical filter is a non-light-absorbing interference type color filter which reflects light of a predetermined color and transmits a complementary color of the predetermined color therethrough.

3. The image display element according to claim 1 or 2, wherein the multilayer film optical filter is a dielectric multilayer film, a transparent resin multilayer film or a glass multilayer film.

4. The image display element according to one of claims 1 to 3, wherein charged layers of a transparent dielectric material, a transparent ferroelectric material or a transparent chargeable material are formed on outer peripheries of the multilayer film optical filter.

5. The image display element according to one of claims 1 to 4, wherein a maximum outside dimension of the multilayer film optical filter falls within a range of 2 µm to 200 µm.

6. The image display element according to one of claims 1 to 5, wherein the multilayer film optical filter has an outer shape which is one of a planar body, a cube and a sphere.

7. An image display sheet comprising:
a plurality of charged image display elements, each defined in one of claims 1 to 6;
a pair of transparent electrodes which transmit visible light therethrough; and
a pair of transparent support films which rotatably accommodate the plurality of image display elements at a fixed position between the pair of transparent electrodes,
wherein rotation or movement of the image display elements is controllable by applying a voltage to the pair of transparent electrodes to apply an electric field to the image display elements.

8. The image display sheet according to claim 7, wherein one of red, green, blue, cyan, magenta, yellow and black/white is displayed.

9. An image display apparatus comprising an image display sheet defined in one of claims 7 and 8, wherein one of the pair of support films of the image display sheet has a rear or front surface on which a rear or front surface sheet is disposed, or to which a reflecting or absorbing film is applied.

10. An image display apparatus comprising: a red image display sheet of claim 8 which displays a red color, a green image display sheet of claim 8 which displays a green color and a blue image display sheet of claim 8 which displays a blue color, the red, green and blue image display sheets being superimposed in such a manner that respective pixel positions of the respective image display sheets overlap, thereby effecting color image display based on additive color mixing.

11. An image display apparatus comprising: a cyan image display sheet of claim 8 which displays a cyan color, a magenta image display sheet of claim 8 which displays a magenta color and a yellow image display sheet of claim 8 which displays a yellow color, the cyan, magenta and yellow image display sheets being superimposed in such a manner that respective pixel positions of the respective image display sheets overlap, thereby effecting color image display based on additive color mixing.

12. The image display apparatus according to one of claims 9 to 11, wherein image display elements corresponding to display colors of respective pixels are used to display the display colors of the respective pixels.

13. The image display apparatus according to one of claims 9 to 12, wherein a reflection type image displaying method is used to perform image display.

14. The image display apparatus according to one of claims 9 to 12, wherein a transmission type image displaying method is used to perform image display.

15. The image display apparatus according to claim 13, wherein a rear surface sheet is arranged on a rearmost surface of an image display surface, or an absorbing film is applied to the rearmost surface of the image display surface.

16. The image display apparatus according to claim 14, wherein a front surface sheet is arranged on a foremost surface of an image display surface, or a reflecting film is applied to the foremost surface of the image display surface.

17. An electronic paper display comprising an image display apparatus defined in one of claims 10 to 16.

18. An image displaying method comprising:
rotatably accommodating a plurality of image display elements, each including a charged multilayer film optical filter at a fixed position between transparent electrodes formed on a pair of support films which transmit visible light therethrough; and
applying an electric field to the image display elements to control a direction of each of the image display elements to thereby effect image displaying.
